# EUROPEAN PATENT SPECIFICATION

(11) **EP 4 299 953 B1**
(45) Date of publication and mention of the grant of the patent: **17.09.2025**
(21) Application number: 23181298.3
(22) Date of filing: 23.06.2023
(51) Int. Cl.: F16H 61/421, F16H 61/438

(54) **METHOD AND CONTROL SYSTEM OF A HYDRAULIC TRANSMISSION OF A WORK OR AGRICULTURAL VEHICLE**
VERFAHREN UND STEUERSYSTEM EINES HYDRAULISCHEN GETRIEBES EINES ARBEITS- ODER LANDWIRTSCHAFTLICHEN FAHRZEUGS
PROCÉDÉ ET SYSTÈME DE COMMANDE D'UNE TRANSMISSION HYDRAULIQUE D'UN VÉHICULE DE TRAVAIL OU AGRICOLE

(30) Priority: 28.06.2022 IT 202200013660
(43) Date of publication of application: 03.01.2024
(73) Proprietor: CNH Industrial Italia S.p.A., 10156 Torino (IT)
(72) Inventor: GARRAMONE, Adriano, 10156 Turin (IT); VENEZIA, Antonio, 10156 Turin (IT); GRAVILI, Andrea, 10156 Turin (IT); LIBERTI, Stefano, 10156 Turin (IT)
(74) Representative: CNH Industrial IP Department

(56) References cited:
- DE-A1- 102015 223 123
- JP-A- 2020 153 384
- US-A- 5 582 007
- US-A1- 2006 150 624
- US-A1- 2020 199 850

## Description

### Field of the invention

The present invention relates to the field of hydraulic transmission systems for work and agricultural machines.

### State of the art

Motorized agricultural or work vehicles are well known for handling materials and performing specific heavy tasks. Examples of such vehicles are disclosed in US2020/199850A and US2006/150624A.

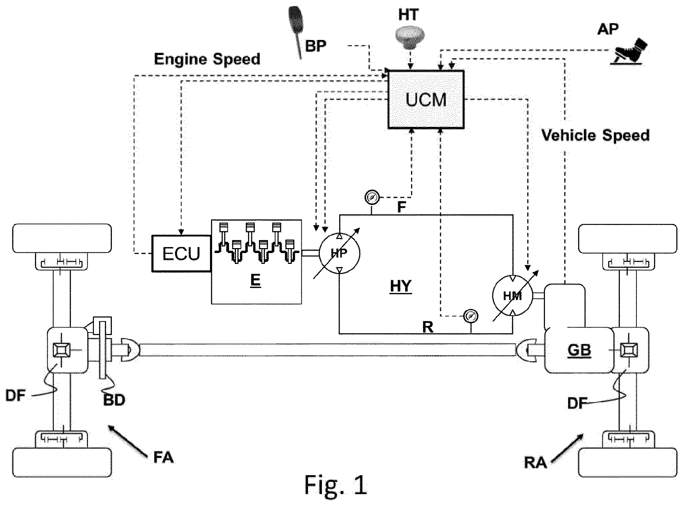

With reference to Figure 1, a prime mover E, generally an internal combustion engine, drives a variable displacement hydraulic pump HP in rotation, which powers a hydraulic motor HM operatively connected to the hydraulic pump defining a so-called hydrostat HY, in which a forward hydraulic line F and a return hydraulic line R interconnect the hydraulic pump with the hydraulic motor.

The displacement of the hydraulic pump is electrically controlled. Generally, there is a map of adjustments of the hydraulic pump geometry that allows to control the displacement of the pump according to the rotation speed of the prime mover. Typically, the relationship between pump displacement and prime mover speed is linear starting from prime mover idling conditions. In other words, when the prime mover turns to a minimum (low idle) the angle of the swash plate that defines the displacement of the hydraulic pump achieves zero displacement.

Two solenoid valves are associated with the hydraulic pump, one for controlling the pump in forward running and one for controlling the pump in reverse.

Therefore, the displacement of the hydraulic pump depends on the excitation current of one of the two solenoid valves and on the hydrostatic load perceived by the same hydraulic pump.

When the operator commands the vehicle to reverse, the excitation current of the active solenoid valve is reduced according to a ramp and after it has reached its minimum value, the other solenoid valve is energized.

The hydraulic motor, connected to the hydraulic pump to define the so-called hydrostat, can be passive or active type. In the second case it is equipped with a solenoid valve to control its displacement. When the motor is passive actuated, it adjusts its displacement according to the perceived resisting torque, namely the pressure on the forward hydraulic line. When instead it is of the active type, the displacement is electrically adjusted according to a predetermined adjustment map, defined according to a predetermined control strategy of the hydraulic motor.

When the operator commands the reversal of the direction of travel of the vehicle suddenly, while the vehicle is still moving in the opposite direction to the variation, the hydraulic pump first reaches the zero displacement and subsequently reverses the inclination of the swash plate according to the strategy described above. Meanwhile, the hydraulic motor starts to work as a pump by rapidly increasing its displacement and generating a corresponding flow of hydraulic oil that reaches the hydraulic pump, which in turn starts to work as a hydraulic motor, with the result that the internal combustion engine E tends to increase its rotation speed, being driven into rotation by the hydraulic pump functioning as hydraulic motor. In other words, the hydraulic pump acts as a motor and the motor acts as a hydraulic pump.

The control dynamics described above lead to significant jerks by the vehicle when reversing. This problem is particularly felt in mechanical shovels called "wheel loaders" generally used in Y-shaped paths for moving goods or materials.

### Summary of the invention

The object of the present invention is to limit the jerks generated by the hydraulic transmission due to the sudden command to reverse the direction of travel.

The basic idea of the present invention is to implement a hydrostat with an active hydraulic motor and to detect a reversal motion request when the motion direction selector indicates a direction of the running opposite to the actual direction of running of the vehicle, and when this condition is detected, it is identified as a function of the speed of the vehicle
- A target displacement value of the hydraulic motor,
- A rate of increase of the control signal of the displacement of the hydraulic motor, in order to reach said target displacement value.

These values, of target displacement and of the rate of increase of the control signal, are advantageously identified by means of two respective maps.

Thanks to the present invention, it is possible to limit the dynamics of the hydrostat by suppressing the jerks that in the long run can impact the health of the operator.

When the deceleration phase is completed, the value of the engine displacement is adjusted with the value indicated by the aforementioned predetermined adjustment map of the hydraulic motor. Advantageously, in this way a slowing down of the vehicle without jerking is obtained both in the vehicle deceleration phase and after the restoration of the usual control strategies of the hydrostat.

It should be noted that the flow of hydraulic oil generated by the hydraulic motor, which functions as a pump, depends on its displacement and on the speed of the vehicle. This means that the faster the vehicle is, the high is the probability it is to push the internal combustion engine over-revs, with the risk of damaging it. If the above maps are well calibrated, the risk of over-revs of the internal combustion engine is reduced or eliminated. Therefore, the present invention also contributes to solving, albeit partially, the problem of possible over-revs of the internal combustion engine.

Although the target displacement value is identified by means of a predetermined map, the rotation speed of the internal combustion engine is continuously monitored so as tc reduce its value if it exceeds a predetermined threshold. Preferably, also the rate of increase of the control signal is decreased so as to avoid further reductions of the pump displacement caused by the exceeding of said speed threshold. In this way, the risk of over-revving the internal combustion engine is further reduced. The dependent claims describe preferred variants of the invention.

### Brief description of the figures

Further objects and advantages of the present invention will become clear from the following detailed description of an example of its embodiment (and its variants) and from the attached drawings given purely by way of non-limiting explanation, in which:
Figure 1 shows a hydraulic transmission diagram of a work or agricultural machine according to the known art and subject to the modification of the present invention;
Figure 2 shows an example of a flow chart object of the present invention.

The same reference numbers and letters in the figures identify the same elements or components or functions. The dotted blocks are to be considered completely optional.

It should also be noted that the terms "first", "second", "third", "upper", "lower" and the like can be used here to distinguish various elements. These terms do not imply a spatial, sequential or hierarchical order for the modified elements unless specifically indicated or inferred from the text.

The elements and features illustrated in the various preferred embodiments, including the drawings, can be combined with each other as long as they are in conformity with the claims.

### Detailed description of exemplary embodiments

The present invention proposes a control method of a hydraulic transmission of a work or agricultural machine, for example according to the scheme of figure 1 of the known art. The transmission HY comprises an electrically controllable variable displacement hydraulic pump HP and an electrically controllable variable displacement hydraulic motor HM.

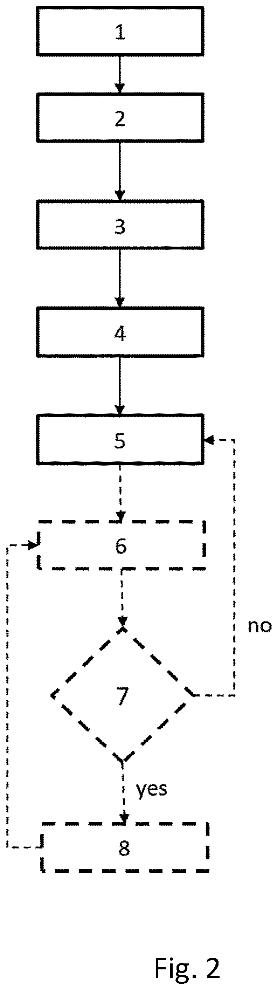

With reference to Figure 2, according to the present invention the following steps are performed:
- Step 1 detecting a command to reverse the direction of travel while the vehicle is in motion. A command to reverse the direction of travel is recognized when the vehicle is moving forward and reverse gear is selected at the same time, or when the vehicle is moving backwards and forward gear is selected at the same time. Generally, in work or agricultural machines this command is given by means of a man/machine interface, such as a switch or by means of a joystick lever;
- Step 2 acquisition of an initial vehicle speed; in other words, a value of the vehicle speed is acquired at the instant in which the reverse command is detected,
- Step 3 calculation of a first target displacement value of the hydraulic motor as a function of said initial speed,
- Step 4 calculation of a rate of variation of a control signal of the displacement of the hydraulic motor to bring the displacement of the hydraulic motor to the first target displacement value;
- Step 5 generation of a control signal of the displacement of the hydraulic motor to reach said first target displacement value according to said rate of change, until the vehicle stops.

Preferably, during the variation of the displacement, a value of rotation speed of the combustion engine is monitored (Step 6) and when said speed value exceeds (Step 7 = yes) a predetermined speed threshold, said variation of the displacement of the hydraulic motor is interrupted. (Step 8) as long as the rotation speed of the internal combustion engine assumes a value lower than or equal to a second speed threshold, lower than the first speed threshold.

Preferably, the variation of the hydraulic motor displacement involves an increase in the displacement and in which when the displacement variation is interrupted, then in addition to the interruption, a predetermined reduction of the displacement of the hydraulic motor is imposed.

The method comprises a subsequent step of controlling the hydraulic motor according to a predetermined adjustment map during the restart from a standstill in the direction imparted through the command for reversing the direction of travel.

More specifically, after stopping the vehicle, the method further includes
- Step 9 calculate a second target displacement value and then
- Step 10 calculate a displacement rate of variation to match a current displacement value with said second target displacement value.

The present invention can be advantageously implemented by means of a computer program which comprises coding means for carrying out one or more steps of the method, when this program is executed on a computer. Therefore it is intended that the scope of protection extends to said computer program and further to computer readable means comprising a recorded message, said computer readable means comprising program coding means for carrying out one or more steps of the method, when said program is run on a computer.

Implementation variants of the described non-limiting example are possible, without however departing from the scope of protection of the present invention as defined the claims.

From the above description, the person skilled in the art is able to realize the object of the invention without introducing further construction details.

## Claims

1. A method for controlling a hydraulic transmission of a work or agricultural vehicle, the transmission (HY) comprising an electrically controllable variable displacement hydraulic pump (HP) and an electrically controllable variable displacement hydraulic motor (HM), the method comprising
- (Step 1) detecting a command to reverse the direction of travel while the vehicle is in motion,
- (Step 2) acquisition of an initial vehicle speed,
- (Step 3) calculation of a first target displacement value of the hydraulic motor as a function of said initial speed,
- (Step 4) calculating a rate of variation of a hydraulic motor displacement control signal to bring the hydraulic motor displacement to the first target displacement value;
- (Step 5) generation of a control signal of the displacement of the hydraulic motor to reach said first target displacement value according to said rate of change, until the vehicle stops;
wherein during the generation of said control signal such that the hydraulic motor displacement varies according to said rate of change, the method comprises
- (Step 6) monitoring of a value of rotation speed of the internal combustion engine and when said speed value exceeds a first predetermined speed threshold (Step 7 = yes),
- (Step 8) reduction of the hydraulic motor displacement in order to induce the rotation speed of the internal combustion engine under a second speed threshold lower than the first speed threshold and/or temporary interruption of the variation of the displacement of the hydraulic motor until the rotation speed of the internal combustion engine is reduced below said second speed threshold lower than the first speed threshold.

2. Method according to claim 1, wherein after stopping the vehicle, the method further comprises
- (Step 9) calculation of a second target displacement value,
- (Step 10) calculation of a displacement rate of variation to force a current displacement value to said second target displacement value.

3. Method according to any one of the preceding claims, wherein said first target displacement value is inversely proportional to said initial speed value.

4. Hydraulic transmission of a work or agricultural vehicle, the transmission (HY) comprising an electrically controllable variable displacement hydraulic pump (HP) and an electrically controllable variable displacement hydraulic motor (HM) and processing means (ECU) configured for
- detecting a command to reverse the travel direction while the vehicle is in motion,
- acquiring an initial vehicle speed,
- calculating a first target displacement value of the hydraulic motor as a function of said initial speed,
- calculating a rate of variation of a hydraulic motor displacement control signal to bring the hydraulic motor displacement to the first target displacement value;
- generating a control signal of the displacement of the hydraulic motor to reach said first target displacement value according to said rate of change, until the vehicle stops,
wherein the processing means is configured, during the generation of said control signal such that the hydraulic motor displacement varies according to said rate of variation, to
- monitor a rotation speed value of the internal combustion engine and when said speed value exceeds a first predetermined speed threshold (Step 7 = yes),
- reduce the displacement of the hydraulic motor so as to induce the rotation speed of the internal combustion engine under a second speed threshold lower than the first speed threshold and/or to temporary interrupt the variation of the displacement of the hydraulic motor until the rotation speed of the internal combustion engine is reduced below said second speed threshold lower than the first speed threshold.

5. Transmission according to claim 4, wherein after stopping the vehicle, the processing means are further configured to
- calculate a second target displacement value and
- calculate a rate of variation of the displacement to force a current displacement value to said second target displacement value.

6. Transmission according to any one of the preceding claims 4 - 5,
wherein said first target displacement value is inversely proportional to said initial speed value.

7. A computer program comprising instructions for causing the transmission according to any one of claims 4-6 to perform all the steps of the method according to any one of claims 1 - 3.

8. A computer readable medium having stored the computer program according to claim 7.

## Patentansprüche

1. Verfahren zur Steuerung eines hydraulischen Getriebes eines Arbeits- oder landwirtschaftlichen Fahrzeugs, wobei das Getriebe (HY) eine elektrisch steuerbare hydraulische Verstellpumpe (HP) und einen elektrisch steuerbaren hydraulischen Verstellmotor (HM) umfasst, wobei das Verfahren umfasst:
- Erfassen einer Anweisung, die Bewegungsrichtung umzukehren, während sich das Fahrzeug bewegt (Schritt 1),
- Erhalten einer Anfangsgeschwindigkeit des Fahrzeugs (Schritt 2),
- Berechnen eines ersten Verstell-Sollwerts des hydraulischen Motors in Abhängigkeit von der Anfangsgeschwindigkeit (Schritt 3),
- Berechnen einer Änderungsrate eines Steuersignals der Verstellung des hydraulischen Motors, um die Verstellung des hydraulischen Motors auf den ersten Verstell-Sollwert einzustellen (Schritt 4);
- Erzeugen eines Steuersignals der Verstellung des hydraulischen Motors, um gemäß der Änderungsrate den ersten Verstell-Sollwert zu erhalten, bis das Fahrzeug anhält (Schritt 5);
wobei, während der Erzeugung des Steuersignals derart, dass sich die Verstellung des hydraulischen Motors gemäß der Änderungsrate ändert, das Verfahren weiterhin umfasst:
- Überwachen eines Drehzahlwerts des Verbrennungsmotors (Schritt 6) und wann der Drehzahlwert einen ersten vorbestimmten Drehzahl-Grenzwert übersteigt (Schritt 7 = ja),
- Verringern der Verstellung des hydraulischen Motors, damit die Drehzahl des Verbrennungsmotors unter einen zweiten Drehzahl-Grenzwert fällt, der unter dem ersten Drehzahl-Grenzwert liegt, und/oder vorrübergehendes Unterbrechen der Änderung der Verstellung des hydraulischen Motors, bis die Drehzahl des Verbrennungsmotors unter den zweiten Drehzahl-Grenzwert fällt, der niedriger als der erste Drehzahl-Grenzwert ist (Schritt 8).

2. Verfahren nach Anspruch 1, wobei das Verfahren nach dem Anhalten des Fahrzeugs weiterhin umfasst:
- Berechnen eines zweiten Verstell-Sollwerts (Schritt 9),
- Berechnen einer Änderungsrate der Verstellung, um einen aktuellen Verstellwert auf den zweiten Verstell-Sollwert einzustellen (Schritt 10).

3. Verfahren nach einem der vorhergehenden Ansprüche, wobei der erste Verstell-Sollwert umgekehrt proportional zur Anfangsgeschwindigkeit ist.

4. Hydraulisches Getriebe eines Arbeits- oder landwirtschaftlichen Fahrzeugs, wobei das Getriebe (HY) eine elektrisch steuerbare hydraulische Verstellpumpe (HP) und einen elektrisch steuerbaren hydraulischen Verstellmotor (HM) und eine Verarbeitungseinrichtung (ECU) umfasst, die eingerichtet zum:
- Erfassen einer Anweisung, um die Bewegungsrichtung umzukehren, während sich das Fahrzeug bewegt,
- Erhalten einer Anfangsgeschwindigkeit des Fahrzeugs,
- Berechnen eines ersten Verstell-Sollwerts des hydraulischen Motors in Abhängigkeit von der Anfangsgeschwindigkeit,
- Berechnen einer Änderungsrate eines Steuersignals der Verstellung des hydraulischen Motors, um die Verstellung des hydraulischen Motors auf den ersten Verstell-Sollwert einzustellen;
- Erzeugen eines Steuersignals der Verstellung des hydraulischen Motors, um gemäß der Änderungsrate den ersten Verstell-Sollwert zu erhalten, bis das Fahrzeug anhält,
wobei während der Erzeugung des Steuersignals derart, dass sich die Verstellung des hydraulischen Motors gemäß der Änderungsrate ändert, die Verarbeitungseinrichtung dazu eingerichtet ist:
- Überwachen eines Drehzahlwerts des Verbrennungsmotors und wann der Drehzahlwert einen ersten vorbestimmten Drehzahl-Grenzwert übersteigt (Schritt 7 = ja),
- Verringern der Verstellung des hydraulischen Motors, damit die Drehzahl des Verbrennungsmotors unter einen zweiten Drehzahl-Grenzwert fällt, der unter dem ersten Drehzahl-Grenzwert liegt, und/oder vorrübergehendes Unterbrechen der Änderung der Verstellung des hydraulischen Motors, bis die Drehzahl des Verbrennungsmotors unter den zweiten Drehzahl-Grenzwert fällt, der niedriger als der erste Drehzahl-Grenzwert ist.

5. Getriebe nach Anspruch 4, wobei nach dem Anhalten des Fahrzeugs die Verarbeitungsvorrichtung weiterhin dazu eingerichtet ist:
- Berechnen eines zweiten Verstell-Sollwerts, und
- Berechnen einer Änderungsrate der Verstellung, um einen aktuellen Verstellwert auf den zweiten Verstell-Sollwert einzustellen.

6. Getriebe nach einem der vorhergehenden Ansprüche 4 bis 5, wobei der erste Verstell-Sollwert umgekehrt proportional zur Anfangsgeschwindigkeit ist.

7. Computerprogramm, welches Anweisungen umfasst, um zu bewirken, dass das Getriebe nach einem der Ansprüche 4 bis 6 sämtliche Schritte des Verfahrens nach einem der Ansprüche 1 bis 3 ausführt.

8. Computerlesbares Medium, auf dem das Computerprogramm nach Anspruch 7 gespeichert ist.

## Revendications

1. Un procédé de commande d'une transmission hydraulique d'un véhicule de travail ou véhicule agricole, la transmission (HY) comprenant une pompe hydraulique à cylindrée variable commandable électriquement (HP) et un moteur hydraulique à cylindrée variable commandable électriquement (HM), le procédé comprenant
- (Étape 1) la détection d'une commande visant à inverser le sens de déplacement alors que le véhicule est en mouvement,
- (Étape 2) l'acquisition d'une vitesse de véhicule initiale,
- (Étape 3) le calcul d'une première valeur de cylindrée cible du moteur hydraulique en fonction de ladite vitesse initiale,
- (Étape 4) le calcul d'un taux de variation d'un signal de commande de cylindrée de moteur hydraulique afin que la cylindrée de moteur hydraulique atteigne la première valeur de cylindrée cible ;
- (Étape 5) la génération d'un signal de commande de la cylindrée du moteur hydraulique afin d'atteindre ladite première valeur de cylindrée cible en fonction dudit taux de variation, jusqu'à ce que le véhicule s'arrête ;
dans lequel, pendant la génération dudit signal de commande de sorte que la cylindrée du moteur hydraulique varie en fonction dudit taux de variation, le procédé comprend
- (Étape 6) la surveillance d'une valeur de vitesse de rotation du moteur à combustion interne et, lorsque ladite valeur de vitesse dépasse un premier seuil de vitesse prédéterminé (Étape 7 = oui),
- (Étape 8) la réduction de la cylindrée du moteur hydraulique afin d'amener la vitesse de rotation du moteur à combustion interne sous un second seuil de vitesse inférieur au premier seuil de vitesse et/ou d'interrompre temporairement la variation de la cylindrée du moteur hydraulique jusqu'à ce que la vitesse de rotation du moteur à combustion interne passe sous ledit second seuil de vitesse inférieur au premier seuil de vitesse.

2. Procédé selon la revendication 1, dans lequel, après l'arrêt du véhicule, le procédé comprend en outre
- (Étape 9) le calcul d'une seconde valeur de cylindrée cible,
- (Étape 10) le calcul d'un taux de variation de cylindrée pour forcer une valeur de cylindrée actuelle à atteindre ladite seconde valeur de cylindrée cible.

3. Procédé selon l'une quelconque des revendications précédentes, dans lequel ladite première valeur de cylindrée cible est inversement proportionnelle à ladite valeur de vitesse initiale.

4. Transmission hydraulique d'un véhicule de travail ou véhicule agricole, la transmission (HY) comprenant une pompe hydraulique à cylindrée variable commandable électriquement (HP) et un moteur hydraulique à cylindrée variable commandable électriquement (HM) et des moyens de traitement (ECU) configurés pour
- détecter une commande visant à inverser le sens de déplacement alors que le véhicule est en mouvement,
- acquérir une vitesse de véhicule initiale,
- calculer une première valeur de cylindrée cible du moteur hydraulique en fonction de ladite vitesse initiale,
- calculer un taux de variation d'un signal de commande de cylindrée de moteur hydraulique afin que la cylindrée de moteur hydraulique atteigne la première valeur de cylindrée cible ;
- générer un signal de commande de la cylindrée du moteur hydraulique afin d'atteindre ladite première valeur de cylindrée cible en fonction dudit taux de variation, jusqu'à ce que le véhicule s'arrête,
dans lequel les moyens de traitement sont configurés, pendant la génération dudit signal de commande de sorte que la cylindrée du moteur hydraulique varie en fonction dudit taux de variation, pour
- surveiller une valeur de vitesse de rotation du moteur à combustion interne et, lorsque ladite valeur de vitesse dépasse un premier seuil de vitesse prédéterminé (Étape 7 = oui),
- réduire la cylindrée du moteur hydraulique afin d'amener la vitesse de rotation du moteur à combustion interne sous un second seuil de vitesse inférieur au premier seuil de vitesse et/ou d'interrompre temporairement la variation de la cylindrée du moteur hydraulique jusqu'à ce que la vitesse de rotation du moteur à combustion interne passe sous ledit second seuil de vitesse inférieur au premier seuil de vitesse.

5. Transmission selon la revendication 4, dans laquelle, après l'arrêt du véhicule, les moyens de traitement sont en outre configurés pour
- calculer une seconde valeur de cylindrée cible et
- calculer un taux de variation de cylindrée afin de forcer une valeur de cylindrée actuelle à atteindre ladite seconde valeur de cylindrée cible.

6. Transmission selon l'une quelconque des revendications 4 à 5 précédentes, où ladite première valeur de cylindrée cible est inversement proportionnelle à ladite valeur de vitesse initiale.

7. Un programme informatique comprenant des instructions pour amener la transmission selon l'une quelconque des revendications 4 à 6 à exécuter toutes les étapes du procédé selon l'une quelconque des revendications 1 à 3.

8. Un support lisible par ordinateur sur lequel est stocké le programme informatique selon la revendication 7.
